# EUROPÄISCHE PATENTSCHRIFT

(11) **EP 4 556 754 B1**
(45) Veröffentlichungstag und Bekanntmachung des Hinweises auf die Patenterteilung: **18.02.2026**
(21) Anmeldenummer: 24211948.5
(22) Anmeldetag: 11.11.2024
(51) Int. Cl.: F16H 19/04, B65F 3/04

(54) **ANTRIEBSEINHEIT**
DRIVE UNIT
GROUPE PROPULSEUR

(30) Priorität: 17.11.2023 DE 102023132146
(43) Veröffentlichungstag der Anmeldung: 21.05.2025
(73) Patentinhaber: Zöller-Kipper GmbH, 55130 Mainz (DE)
(72) Erfinder: Lüking, Niklas, 55130 Mainz (DE)
(74) Vertreter: Regler, Markus Egid

(56) Entgegenhaltungen:
- DE-A1- 102019 131 986
- DE-A1- 19 926 882
- KR-A- 20130 043 728
- ANONYMOUS: "Neues bewegen start motion", NEFF-GEWINDETRIEBE, 1 September 2023 (2023-09-01), pages 1 - 376, XP093229287, Retrieved from the Internet <URL:https://neff-gewindetriebe.de/fileadmin/Servicecenter/Kataloge/NEFF_Hauptkatalog_01_23_DE_EN.pdf#page=290>

## Beschreibung

Die Erfindung betrifft eine Antriebseinheit mit den Merkmalen des Anspruchs 1 sowie eine Hub-Kippvorrichtung mit einer derartigen Antriebseinheit.

Damit die Funktionalität von Getriebeteilen nicht beeinträchtigt wird, ist es wichtig, dass sie vor Verschmutzung geschützt werden. Ansonsten besteht die Gefahr, dass sie durch Anlagerung von Staub, Schmutz und anderem Unrat ihre Beweglichkeit einbüßen oder blockiert werden und sie ihren vorgesehenen Zweck nicht mehr erfüllen können.

Aus der DE 10 2019 131 986 A1 ist eine Getriebeeinheit mit einem langgestreckten Getriebeteil bekannt, die zum Betreiben einer Hub-Kippvorrichtung eines Abfallsammelfahrzeugs eingesetzt wird. Dabei wirken zwei Getriebeteile zusammen, um die Hub- und Kippbewegung eines Hubwagens abzubilden. Dabei bewegt sich ein Schlitten relativ zu dem langgestreckten Getriebeteil, das dadurch relativ ungeschützt Umgebungseinflüssen ausgesetzt ist. Verschmutzung führt hier dazu, dass die Hub-Kippvorrichtung ihren Zweck nicht mehr erfüllen kann, da dann die Getriebeeinheit blockiert ist. Um eine Verschmutzung vorzubeugen, ist eine Schutzhülse vorgesehen, die das langgestreckte Getriebeteil situativ umgibt. Nachteilig daran sind der große Bauraumbedarf, wodurch die Schutzhülse über den Rahmen der Hub-Kippvorrichtung hinausragt, und die geringe Flexibilität. Dadurch dass die Schutzhülse zumindest zeitweise über den Rahmen hinausragt, besteht auch Verletzungsgefahr für Bedienpersonal und Passanten.

Es ist daher die Aufgabe der vorliegenden Erfindung, eine Antriebseinheit vorzuschlagen, die nicht durch Umwelteinflüsse in ihrer Funktionalität beeinträchtigt wird.

Diese Aufgabe wird gelöst durch eine Antriebseinheit mit den Merkmalen nach Patentanspruch 1. Vorteilhafte Weiterbildungen sind Gegenstand der abhängigen Ansprüche.

Die Erfindung betrifft eine Antriebseinheit mit einem Schlitten und einer den Schlitten bewegenden Getriebeeinheit, wobei die Getriebeeinheit ein langgestrecktes Getriebeteil aufweist, das in seiner Längsrichtung in einem Führungskanal des Schlittens relativ zu diesem bewegbar ist, wobei an zumindest einer Öffnung des Führungskanals ein längenvariables, das Getriebeteil umgebendes Abdeckelement für das Getriebeteil angeordnet ist.

Der Schlitten fungiert als Trageelement für ein zu bewegendes Bauteil. Dabei kann es sich beispielsweise um die Welle einer Hub-Kippvorrichtung handeln, an der ein Hubwagen befestigt wird. Durch die Getriebeeinheit bewegt sich der Schlitten relativ zu dem langgestreckten Getriebeteil, dass aus dem Führungskanal bewegt wird und dann zumindest zeitweise Umwelteinflüssen ausgesetzt wäre. Das Abdeckelement umgibt das langgestreckte Getriebeteil und hält dadurch Staub, Schmutz oder Spritzwasser davon fern. Da es längenvariabel ist, kann es in seiner Längserstreckung an den Längenabschnitt des langgestreckten Getriebeteils angepasst werden, der nicht durch den Führungskanal abgeschirmt ist. Das hat gegenüber einem starren, rohrähnlichen Abdeckelement den Vorteil, dass ein geringerer Bauraum für das Abdeckelement vorgesehen werden muss. Oftmals ist ein erfindungsgemäße Antriebseinheit in einem Rahmen angeordnet, in dem kein Platz für ein starres, in seiner Länge nicht veränderbares Abdeckelement ist. Ein solches Abdeckelement müsste situativ über den Rahmen hinausragen und kann dann eine Verletzungsursache darstellen. Ein längenvariables Abdeckelement kann hingegen so ausgestaltet werden, dass seine kleinste Längenausdehnung so bemessen ist, dass der vorhandene Bauraum genutzt werden kann,

Das Abdeckelement ist in seiner Länge in einen ausgefahrenen Zustand vergrößerbar, wenn das langgestreckte Getriebeteil sich relativ zu dem Schlitten aus dem Führungskanal bewegt, und in seiner Länge in einen eingefahrenen Zustand verkleinerbar, wenn das langgestreckte Getriebeteil sich relativ zu dem Schlitten in den Führungskanal bewegt. Damit ist sichergestellt, dass das langgestreckte Getriebeteil immer ausreichend abgedeckt ist. Exemplarisch in Bezug auf eine Hub-Kippvorrichtung kann das bedeuten, dass bei einer Bewegung des Schlittens in Einbaulage nach oben, also in Fahrzeughochrichtung, sich das Getriebeteil aus dem Führungskanal hinausbewegt. Dabei wird das längenvariable Abdeckelement ausgefahren und vergrößert sich in Richtung seiner Längserstreckung. Bewegt sich der Schlitten nach unten, fährt das Getriebeteil in den Führungskanal hinein und das längenvariable Abdeckelement wird in seiner Längsrichtung wieder verkleinert.

Gemäß der Erfindung ist das Abdeckelement als Spiralfederelement ausgestaltet. Dann steht es im eingefahrenen Zustand unter einer Vorspannung, so dass es automatisch in den ausgefahrenen Zustand gebracht wird, indem die Vorspannung gelöst wird.

Eine weitere vorteilhafte Ausgestaltung sieht vor, dass das Abdeckelement im ausgefahrenen Zustand hohlzylindrisch oder hohlkonisch ausgestaltet ist. Dadurch ist das langgestreckte Getriebeteil vollständig umgebbar und von allen Seiten vor Verschmutzung geschützt. Besonders bevorzugt ist das Abdeckelement als Zylinderoder konische Spirale ausgestaltet.

Bevorzugt weist der Schlitten im Bereich der Öffnung des Führungskanals einen Aufnahmeraum für das Abdeckelement auf. Damit kann das Abdeckelement an Ort und Stelle gehalten werden und verrutscht nicht.

Besonders bevorzugt weist der Führungskanal im Bereich der Öffnung einen vergrößerten Durchmesser auf, um den Aufnahmeraum zu bilden. Damit kann der Aufnahmeraum bei der Fertigung besonders einfach erzeugt werden und auch das Einsetzen des Abdeckelements in den Aufnahmeraum ist sehr montagefreundlich. Weiter besonders bevorzugt ist der vergrößerte Durchmesser des Aufnahmeraums zwei bis zehn Millimeter, insbesondere drei bis vier Millimeter, größer als der Normaldurchmesser des Führungskanals. Höchst bevorzugt ist der vergrößerte Durchmesser des Aufnahmeraums zwei bis zehn Millimeter, insbesondere drei bis vier Millimeter, größer als der lokale Durchmesser des Abdeckelements.

Weiterhin bevorzugt besteht das Abdeckelement aus einem metallischen Material. Der Damit ist das Abdeckelement sehr formstabil und es wird die Gefahr vermieden, dass das Abdeckelement im Betrieb abknickt und die Getriebeeinheit blockiert ist. Zudem ist ein metallisches Abdeckelement stabiler gegen Verschleiß und Beschädigung.

Die Erfindung sieht vor, dass ein Widerlager mit einem freien Ende des Abdeckelements in Anlage ist. Das Widerlager sorgt dafür, dass das Abdeckelement sich nicht unkontrolliert vergrößert oder verkleinert, und beugt so Beschädigungen vor. Gleichzeitig dient es als Anschlagelement und kann das Einfahren des längenvariablen Abdeckelements unterstützen oder auch antreiben.

Bevorzugt umfasst das Widerlager eine Stange, die an dem langgestreckten Getriebeteil angeordnet ist, sowie einen Teller, der in einem Endbereich der Stange angeordnet ist und der mit dem freien Ende des Abdeckelements in Anlage ist.

Besonders bevorzugt erstreckt sich dabei die Stange innerhalb des Abdeckelements. Das Abdeckelement ist dann zwischen dem Widerlager und dem Schlitten gehalten. Der als Anschlagelement dienende Teller bewegt sich gleichförmig mit dem langgestreckten Getriebeteil von dem Schlitten weg und auf den Schlitten zu. Damit kann er die Längenänderung des Abdeckelements antreiben, indem er Zug darauf ausübt oder dagegen drückt.

Ist das Abdeckelement als Spiralfederelement ausgeführt, bildet der Teller einen Widerstand gegen die Federkraft des Abdeckelements. Bewegt sich der Teller geführt von der Stange und dem langgestreckten Getriebeteil von dem Schlitten weg, vergrößert sich das Abdeckelement getrieben durch die aus seiner Vorspannung entstehende Kraft von selbst. Umgekehrt übt der Teller einen Druck auf das Abdeckelement aus und verkleinert dieses wieder. Das langgestreckte Getriebeteil und der Schlitten erzeugen die Längenvariation des Abdeckelements gewissermaßen durch ihre vorgesehene Relativbewegung.

Weiterhin bevorzugt weist die Stange zumindest abschnittsweise ein Gewinde auf. Damit können die einzelnen Komponenten einfach miteinander verbunden und zueinander ausgerichtet werden. Beispielsweise können die Endabschnitte der Stange ein Gewinde aufweisen, um dort die Stange mit dem Getriebeteil und dem Teller zu verbinden.

Weiterhin ist vorgesehen, dass die Stange in einer endseitigen Tasche des langgestreckten Getriebeteils gehalten ist. Damit kann die Stange montagefreundlich an dem Getriebeteil angeordnet werden. Vorteilhafterweise weisen die Tasche und die Stange ein Gewinde auf und die Stange kann in die Tasche eingedreht werden. Neben leichter Montierbarkeit, kann auch die Länge der Stange einfach justiert werden.

Weiterhin bevorzugt weist der Teller einen Durchbruch auf, der von der Stange durchgriffen ist. Auch hier ist eine leichte Montierbarkeit gegeben, wobei zudem die Position des Tellers auf der Stange einfach justiert werden kann. So kann die Ausdehnung des Abdeckelements in Längsrichtung festgelegt werden. Insbesondere, wenn die Stange und der Durchbruch des Tellers ein Gewinde aufweisen, kann der Abstand von Teller zu Getriebeteil sehr einfach eingestellt werden. Die Position des Tellers kann zudem einfach mit Schraubmuttern fixiert werden.

In einer weiteren vorteilhaften Ausgestaltung der Erfindung ist vorgesehen, dass der Teller eine Grundfläche und einen davon abragenden Vorsprung aufweist, der in einen Innenraum des Abdeckelements eingreift. Damit kann das Abdeckelement an dem Teller in seiner Position gehalten werden und verrutscht nicht während der Bewegung des Widerhalters quer zu dem Abdeckelement. Zudem wird der Innenraum des Abdeckelements durch den Teller abgedichtet und das Eindringen von Schmutz, Staub und Spritzwasser verhindert.

Besonders bevorzugt ist der Durchmesser des Vorsprungs zwei bis zehn Millimeter, insbesondere drei bis vier Millimeter, kleiner als der Durchmesser der Grundfläche des Tellers. Höchst bevorzugt ist der Durchmesser des Vorsprungs zwei bis zehn Millimeter, insbesondere drei bis vier Millimeter, kleiner als der lokale Durchmesser des Abdeckelements.

Weiterhin bevorzugt ist das Abdeckelement frei beweglich in dem Aufnahmeraum und/oder an dem Widerlager angeordnet. Das bedeutet, dass das Abdeckelement nicht in dem Aufnahmeraum und/oder an dem Widerlager festgelegt ist, sondern beispielsweise eine rotatorische Bewegung um seine Längsachse möglich ist. Damit wird zum einen einer Beschädigung des Abdeckelements vorgebeugt, da dieses einer ungünstigen Krafteinwirkung in gewissem Maß ausweichen kann. Im Fall einer Ausgestaltung als Spiralfederelement begünstigt die freie Lagerung auch die störungsfreie Vergrößerung und Verkleinerung des Abdeckelements.

Bevorzugt ist das langgestreckte Getriebeteil eine Zahnstange.

Weiterhin bevorzugt wirkt das langgestreckte Getriebeteil mit einem an dem Schlitten angeordneten zweiten Getriebeteil zusammen.

Darüber hinaus bevorzugt ist das zweite Getriebeteil ein Zahnrad.

Weiterhin betrifft die Erfindung eine Hub-Kippvorrichtung, insbesondere für ein Abfallsammelfahrzeug, mit einer Antriebseinheit für einen Hubwagen wie vorstehend beschrieben. Hub-Kippvorrichtungen sind stets Umwelteinflüssen, wie Staub, Schmutz oder Niederschlag ausgesetzt. Gleichzeitig ist es notwendig, dass sie möglichst störungsfrei funktionieren, um etwa den Abfallsammelbetrieb nicht zu beeinträchtigen. Die Verwendung einer erfindungsgemäßen Antriebseinheit in einer Hub-Kippvorrichtung führt dazu, dass einer Verschmutzung der Getriebeeinheit entgegengewirkt wird, wodurch dadurch bedingte Ausfälle der Vorrichtung verhindert werden. Zudem wird die Sicherheit für Bedienpersonal und Passanten erhöht, weil die gesamte Vorrichtung aufgrund des geringen Platzbedarfs innerhalb des Rahmens der Hub-Kippvorrichtung untergebracht werden kann und keine Elemente zumindest zeitweise darüber hinausragen.

Weitere Merkmale der Erfindung ergeben sich aus den Figuren und der zugehörigen Beschreibung.

Es zeigen:
- Figur 1: eine Antriebseinheit in Verwendung bei einer Hub-Kippvorrichtung mit eingefahrenem Abdeckelement,
- Figur 2: eine Antriebseinheit in Verwendung bei einer Hub-Kippvorrichtung mit ausgefahrenem Abdeckelement,
- Figur 3: eine Antriebseinheit in perspektivischer Darstellung mit eingefahrenem Abdeckelement,
- Figur 4: eine Antriebseinheit in perspektivischer Darstellung mit ausgefahrenem Abdeckelement,
- Figur 5: eine Antriebseinheit in Schnittdarstellung mit eingefahrenem Abdeckelement,
- Figur 6: eine Antriebseinheit in Schnittdarstellung mit ausgefahrenem Abdeckelement,
- Figur 7: eine Detaildarstellung des Abdeckelements im Querschnitt.

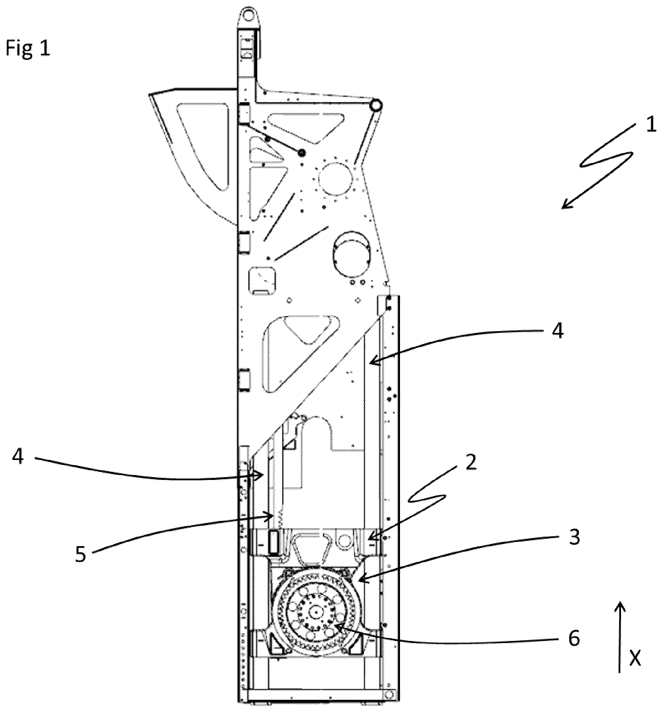

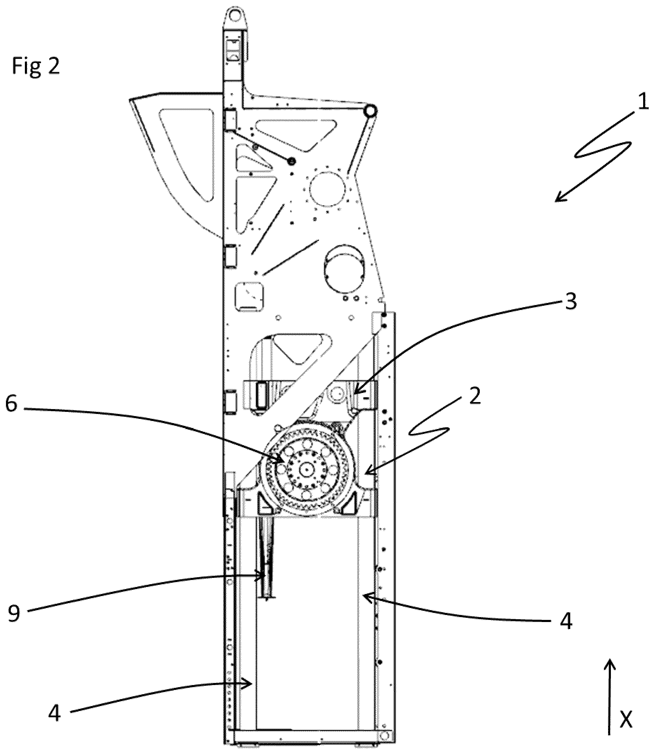

Die Figuren 1 und 2 zeigen eine Hub-Kippvorrichtung 1 für ein Abfallsammelfahrzeug, die mit einer erfindungsgemäßen Antriebseinheit 2 ausgestattet ist. Die Antriebseinheit 2 umfasst einen Schlitten 3, der an Führungsstangen 4 in Fahrzeughochrichtung X geführt ist. An dem Schlitten 3 ist eine um ihre Längsachse rotierbare Welle angeordnet, die einen hier nicht näher dargestellten Hubwagen trägt. An dem Hubwagen wird ein zu entleerender Abfallbehälter eingehängt.

Die Antriebseinheit 2 umfasst ferner eine Getriebeeinheit mit einem ersten langgestreckten Getriebeteil 5, das hier als Zahnstange ausgeführt ist, sowie einem an dem Schlitten 3 angeordneten zweites Getriebeteil 6, hier ein Zahnrad. Das langgestreckte Getriebeteil 5 und das zweite Getriebeteil 6 wirken durch die ineinandergreifenden Zähne zusammen.

In Figur 1 befindet sich der Schlitten 3 in einer unteren Position zu Beginn eines Entleerzyklus. Die Zahnstange 5 befindet sich zumindest abschnittsweise in einem Führungskanal 7, der in dem Schlitten 3 ausgebildet ist. Durch einen Hebemechanismus wird der Schlitten 3 und damit der Hubwagen mit Abfallbehälter in Fahrzeughochrichtung angehoben. Die Zahnstange 5 und der Schlitten 3 werden zunächst parallel zueinander angehoben und bewegen sich gleichförmig in Fahrzeughochrichtung X. Dann wird die Aufwärtsbewegung der Zahnstange 5 blockiert, indem diese gegen einen Anschlag gefahren wird. Das bewirkt, dass das Zahnrad 6 über die Zahnstange 5 abrollt, während sich der Schlitten 3 weiter nach oben bewegt. Die Drehung des Zahnrades 6 wird auf die Welle und den Hubwagen übertragen, so dass der Abfallbehälter überkopf gedreht wird, so dass der darin enthaltene Abfall in einen Sammelbehälter fallen kann. Die Aufwärtsbewegung des Schlittens 3 endet in einer oberen Position, wie sie in Figur 2 dargestellt ist.

Nach dem Blockieren der Zahnstange 5 bewegen sich diese und der Schlitten 3 relativ zueinander. Die Zahnstange 5 bewegt sich in ihrer Längsrichtung L in einem Führungskanal 7 des Schlittens 3. Während der Aufwärtsbewegung des Schlittens 3 gleitet die Zahnstange 5 aus der unteren Öffnung 8 des Führungskanals 7 heraus.

Bei der Abwärtsbewegung kehrt sich der Bewegungsablauf um. Der Schlitten 3 bewegt sich entlang der Fahrzeughochrichtung X nach unten und das Zahnrad 6 rollt mit umgekehrtem Drehsinn auf der Zahnstange 5 ab. Dadurch wird der Hubwagen mit dem Abfallbehälter wieder in die Ausgangslage gedreht. Die Zahnstange 5 bewegt sich relativ zu dem Schlitten 3 wieder in den Führungskanal 7 des Schlittens 3 hinein.

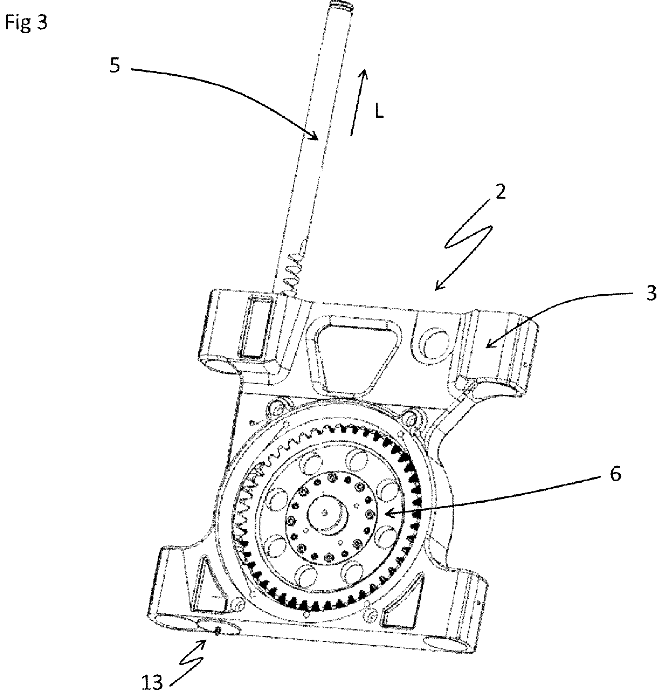

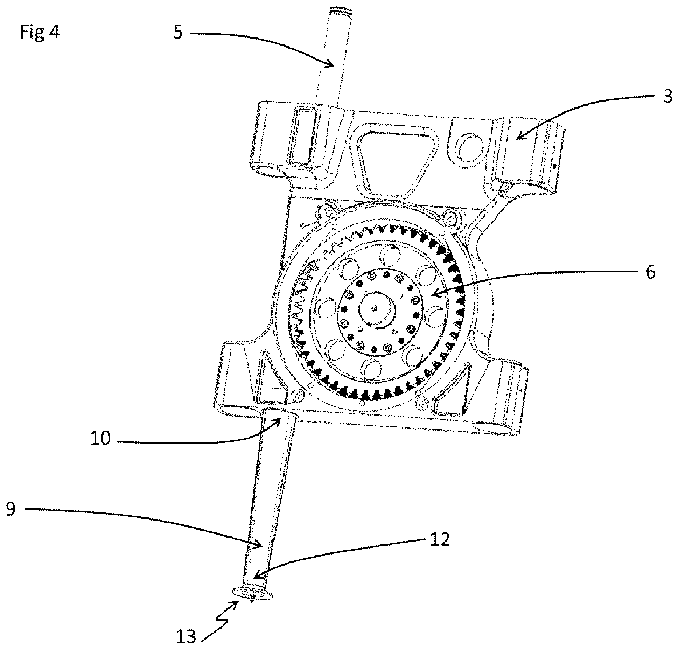

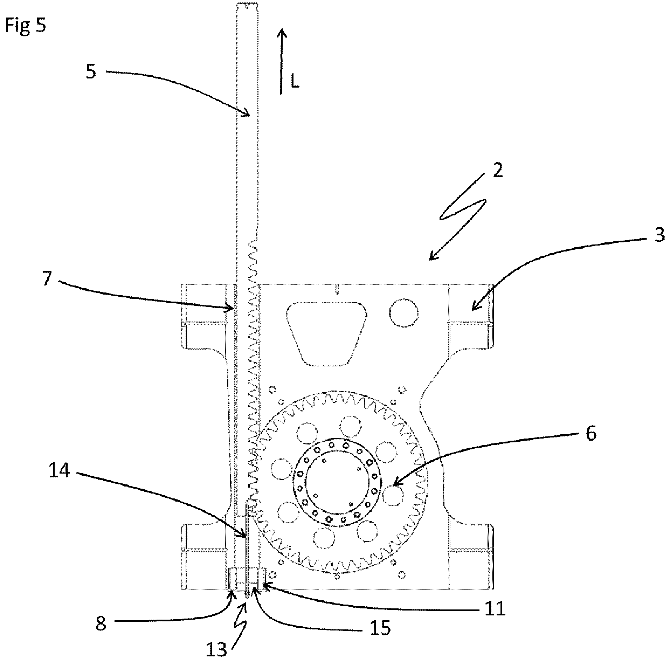

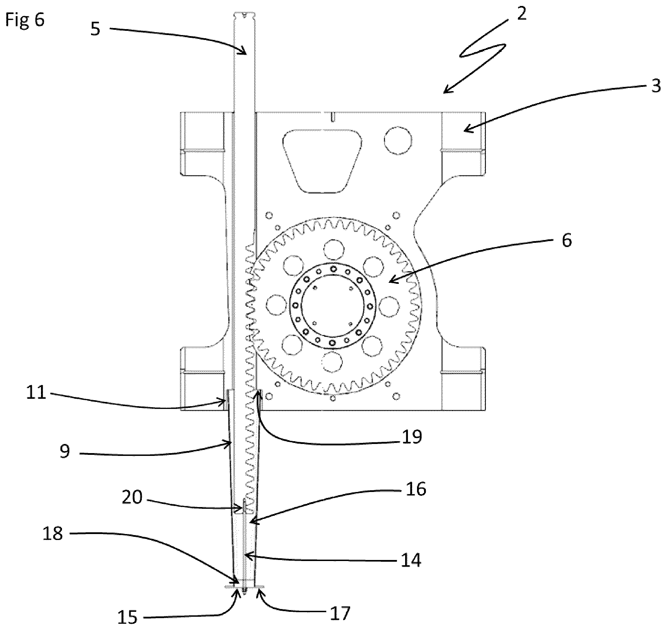

An der unteren Öffnung 8 des Führungskanals 7 ist ein längenvariables Abdeckelement 9 angeordnet. Das Abdeckelement 9 ist in seiner Länge vergrößerbar und verkleinerbar und umgibt die Zahnstange 5, wenn sie aus dem Führungskanal 7 bewegt wird. Innerhalb des Führungskanals 7 ist die Zahnstange 5 vor Verschmutzung weitgehend geschützt. Außerhalb übernimmt diese Aufgabe das Abdeckelement 9. Es vergrößert sich in seiner Länge in einen ausgefahrenen Zustand (Figuren 2, 4 und 6), wenn die Zahnstange 5 aus dem Führungskanal 7 bewegt wird. Umgekehrt verkleinert sich das Abdeckelement in einen eingefahrenen Zustand (Figuren 1, 3 und 5), wenn sich die Zahnstange 5 in den Führungskanal 7 bewegt. Das Abdeckelement 9 hat hier eine hohlkonische Form, wobei sich die Zahnstange 5 im Innenraum 16 des Abdeckelements 9 befindet.

Mit seinem ersten Ende 10 ist das Abdeckelement 9 in einem Aufnahmeraum 11 an dem Schlitten 3 angeordnet. Mit dem zweiten, freien Ende 12 ist das Abdeckelement 9 mit einem Widerlager 13 in Anlage.

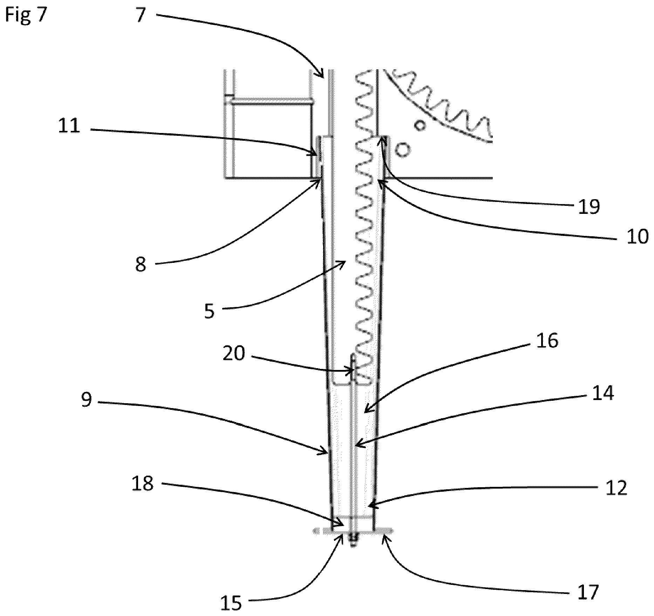

Das Widerlager 13 umfasst eine Stange 14 sowie einen Teller 15 und ist in Figur 7 im Detail dargestellt. Die Stange 13 verfügt an ihren Enden über jeweils ein Gewinde. Mit einem Ende ist sie in eine korrespondierende Tasche 20 der Zahnstange 5 eingedreht. Der Teller 15 ist am gegenüberliegenden Ende der Stange 14 angeordnet, die einen Durchbruch des Tellers 15 durchgreift, und mit Schraubmuttern fixiert. In dieser Ausgestaltung können Stange 14 und Teller 15 sehr einfach montiert und justiert werden.

Der Teller 15 weist eine Grundfläche 17 und einen davon abragenden Vorsprung 18 auf, der in den Innenraum 16 des Abdeckelements 9 eingreift. In diesem Ausführungsbeispiel ist die Grundfläche 17 kreisförmig und der Vorsprung 18 zylinderförmig, passend zu der hohlkonischen Ausgestaltung des Abdeckelements 9. Die Geometrie der einzelnen Komponenten kann aber aneinander angepasst werden. Der Teller 15 deckt die Öffnung des freien Endes 12 des Abdeckelements 9 ab, so dass auch hier kein Schmutz eindringen kann. Dadurch, dass der Vorsprung 18 in den Innenraum 16 eingreift, werden der Teller 15 und das Abdeckelement 9 beispielsweise bei Querbewegungen des Abdeckelements 9 relativ zueinander gehalten, so dass der Innenraum 16 stets abgeschlossen bleibt.

Das Abdeckelement 9 ist als Spiralfederelement, genauer als Zylinderspirale, und aus einem metallischen Material ausgeführt. Im eingefahrenen Zustand liegen die Windungen des Abdeckelements 9 übereinander und die Ausdehnung in Längsrichtung ist nur durch die Breite des Metallstreifens bestimmt. Im eingefahrenen Zustand befindet sich das Abdeckelement 9 unter einer, im eingebauten Zustand in Fahrzeughochrichtung X wirkenden, Vorspannung. Ohne weitere Krafteinwirkung löst sich diese Vorspannung und das Abdeckelement 9 streckt sich in seiner Längsrichtung getrieben durch die Federkraft in seine hohlkonische ausgefahrene Form.

Die erfindungsgemäße Kombination von Abdeckelement 9 und Widerlager 13 macht sich diese Wirkung zunutze. Im eingefahrenen Zustand hält der Teller 15 des Widerlagers 13 das Abdeckelement 9 in dem eingefahrenen Zustand und unter Vorspannung. Bewegt sich die Zahnstange 5 aus dem Führungskanal 7 heraus, bewegt sich der über die Stange 14 mit der Zahnstange 5 verbundene Teller 15 mit der Zahnstange 5 von dem Schlitten 3 weg. Dadurch kann sich das Abdeckelement 9 getrieben von der Federkraft ausdehnen und deckt die Zahnstange 5 gewissermaßen automatisch stets über die volle freiliegende Länge ab.

Bei umgekehrtem Bewegungsablauf fährt die Zahnstange 5 wieder in den Führungskanal 7 ein, wobei sich der Teller 15 auf den Schlitten 3 zubewegt. Dabei übt er eine gegen die Federkraft wirkende Kraft auf das Abdeckelement 9 aus und drückt dieses wieder in den eingefahrenen Zustand zusammen. Die Zahnstange 5 selbst bewirkt die Verkleinerung des Abdeckelements 9 durch die eigene Bewegung.

Diese Ausgestaltung der Erfindung bringt den Vorteil mit sich, dass keine zusätzliche Aktuatorik notwendig ist, um die Länge des Abdeckelements 9 zu variieren. Die einzelnen Komponenten wirken in dieser Hinsicht rein passiv zueinander. Die Anordnung ist damit montage- und wartungsfreundlich.

Zudem benötigt das Abdeckelement 9 nur minimalen Bauraum, da es seine Längenausdehnung dem vorhandenen Platz anpasst. Selbst seine Abmessungen im eingefahrenen Zustand können dem vorhandenen Bauraum in gewissen Grenzen angepasst werden.

Das Abdeckelement 9 ist zudem knickstabil, wodurch ein Verrutschen oder Verklemmen im Betrieb vermieden wird. Gleichermaßen ist es verschleißfest und lange haltbar.

Der Aufnahmeraum 11 in dem Schlitten 3 wird hergestellt, indem der Führungskanal 7 im Bereich seiner Öffnung 8 aufgeweitet wird. Mit anderen Worten weist der Führungskanal 7 im Bereich seiner Öffnung 8 einen größeren Querschnittsdurchmesser auf als in seinen übrigen Abschnitten. Die dadurch entstehende Stufe bildet einen Anschlag 19, an dem das Abdeckelement 9 in Anlage kommt und gegen den es sich abstützt. Der Durchmesser des Aufnahmeraums 11 ist etwa 3 bis 4 Millimeter größer als der äußere Durchmesser des Abdeckelements 9 im eingefahrenen Zustand, wobei darauf zu achten ist, dass ein ausreichend breiter Anschlag 19 gebildet wird, damit das Abdeckelement nicht in den Führungskanal 7 rutscht. Das Abdeckelement 9 sitzt lose und frei beweglich in dem Aufnahmeraum 11. Dieser Bewegungsfreiraum ist wegen der Ausführung als Spiralfederelement notwendig, was insbesondere eine rotatorische Beweglichkeit erforderlich macht, damit das Ein- und Ausfahren ohne Blockieren oder Verklemmen von Statten geht.

Aus demselben Grund ist auch das freie Ende 12 des Abdeckelements 9 lose und frei beweglich an dem Widerlager 13, genauer dessen Teller 15, angeordnet. Der Durchmesser des Vorsprungs 18 des Tellers 15 ist 3 bis 4 Millimeter kleiner als der Durchmesser des Abdeckelements 9 an dessen freien Ende 12. Damit ergibt sich ein gutes Verhältnis aus Beweglichkeit des Abdeckelements 9 und dessen Abdichtung.

### Bezugszeichen

- 1: Hub-Kippvorrichtung
- 2: Antriebseinheit
- 3: Schlitten
- 4: Führungsstange
- 5: Zahnstange, langgestrecktes Getriebeteil
- 6: Zahnrad, zweites Getriebeteil
- 7: Führungskanal
- 8: Öffnung von 7
- 9: Abdeckelement
- 10: erstes Ende von 9
- 11: Aufnahmeraum
- 12: zweites Ende von 9
- 13: Widerlager
- 14: Stange
- 15: Teller
- 16: Innenraum von 9
- 17: Grundfläche von 15
- 18: Vorsprung von 15
- 19: Anschlag
- 20: Tasche
- L: Längsrichtung von 5
- X: Fahrzeughochrichtung

## Patentansprüche

1. Antriebseinheit (2) mit einem Schlitten (3) und einer den Schlitten (3) bewegenden Getriebeeinheit, wobei die Getriebeeinheit ein langgestrecktes Getriebeteil (5) aufweist, das in seiner Längsrichtung in einem Führungskanal (7) des Schlittens (3) relativ zu diesem bewegbar ist, wobei an zumindest einer Öffnung des Führungskanals (7) ein längenvariables, das Getriebeteil (5) umgebendes, als Spiralfederelement ausgestaltetes Abdeckelement (9) für das Getriebeteil (5) angeordnet ist **dadurch gekennzeichnet, dass** ein Widerlager (13) mit einem freien Ende (12) des Abdeckelements (9) in Anlage ist.

2. Antriebseinheit (2) nach Anspruch 1 **dadurch gekennzeichnet, dass** das Abdeckelement (9) in einem ausgefahrenen Zustand hohlzylindrisch oder hohlkonisch ausgestaltet ist.

3. Antriebseinheit (2) nach Anspruch 1 oder 2 **dadurch gekennzeichnet, dass** der Schlitten (3) im Bereich der Öffnung (8) des Führungskanals (7) einen Aufnahmeraum (11) für das Abdeckelement (9) aufweist.

4. Antriebseinheit (2) nach Anspruch 3 **dadurch gekennzeichnet, dass** der Führungskanal (7) im Bereich der Öffnung (8) einen vergrößerten Durchmesser aufweist, um den Aufnahmeraum (11) zu bilden.

5. Antriebseinheit (2) nach zumindest einem der vorstehenden Ansprüche **dadurch gekennzeichnet, dass** das Abdeckelement (9) aus einem metallischen Material besteht.

6. Antriebseinheit (2) nach zumindest einem der vorstehenden Ansprüche **dadurch gekennzeichnet, dass** das Widerlager (13) eine Stange (14) umfasst, die an dem langgestreckten Getriebeteil (5) angeordnet ist, sowie einen Teller (15), der in einem Endbereich der Stange (14) angeordnet ist und der mit dem freien Ende (12) des Abdeckelements (9) in Anlage ist.

7. Antriebseinheit (2) nach Anspruch 6 **dadurch gekennzeichnet, dass** die Stange (14) zumindest abschnittsweise ein Gewinde aufweist.

8. Antriebseinheit (2) nach Anspruch 6 oder 7 **dadurch gekennzeichnet, dass** die Stange (14) in einer endseitigen Tasche (20) des langgestreckten Getriebeteils (5) gehalten ist.

9. Antriebseinheit (2) nach zumindest einem der Ansprüche 6 bis 8 **dadurch gekennzeichnet, dass** der Teller (15) einen Durchbruch aufweist, der von der Stange (14) durchgriffen ist.

10. Antriebseinheit (2) nach zumindest einem der Ansprüche 6 bis 9 **dadurch gekennzeichnet, dass** der Teller (15) eine Grundfläche (17) und einen davon abragenden Vorsprung (18) aufweist, der in einen Innenraum (16) des Abdeckelements (9) eingreift.

11. Antriebseinheit (2) nach zumindest einem der vorstehenden Ansprüche **dadurch gekennzeichnet, dass** das Abdeckelement (9) frei beweglich in dem Aufnahmeraum (11) und/oder an dem Widerlager (13) angeordnet ist.

12. Antriebseinheit (2) nach zumindest einem der vorstehenden Ansprüche **dadurch gekennzeichnet, dass** das langgestreckte Getriebeteil (5) eine Zahnstange ist.

13. Antriebseinheit (2) nach zumindest einem der vorstehenden Ansprüche **dadurch gekennzeichnet, dass** das langgestreckte Getriebeteil (5) mit einem an dem Schlitten (3) angeordneten zweiten Getriebeteil (6) zusammenwirkt.

14. Antriebseinheit (2) nach Anspruch 13 **dadurch gekennzeichnet, dass** das zweite Getriebeteil (6) ein Zahnrad ist.

15. Hub-Kippvorrichtung (1), insbesondere für ein Abfallsammelfahrzeug, mit einer Antriebseinheit (2) für einen Hubwagen nach zumindest einem der vorstehenden Ansprüche.

## Claims

1. Drive unit (2) comprising a slide (3) and a gear unit that moves the slide (3), wherein the gear unit has an elongate gear part (5) which is movable in a guide channel (7) of the slide (3) in its longitudinal direction and relative to the slide, wherein a length-variable cover element (9) for the gear part (5), which is designed as a spiral spring element and surrounds the gear part (5), is arranged at at least one opening of the guide channel (7), **characterized in that** an abutment (13) abuts a free end (12) of the cover element (9).

2. Drive unit (2) according to claim 1, **characterized in that** the cover element (9) is designed to be hollow-cylindrical or hollow-conical in an extended state.

3. Drive unit (2) according to claim 1 or 2, **characterized in that** the slide (3) has a receiving space (11) for the cover element (9) in the region of the opening (8) of the guide channel (7).

4. Drive unit (2) according to claim 3, **characterized in that** the guide channel (7) has a larger diameter in the region of the opening (8) in order to form the receiving space (11).

5. Drive unit (2) according to at least one of the preceding claims,
**characterized in that** the cover element (9) is made of a metal material.

6. Drive unit (2) according to at least one of the preceding claims,
**characterized in that** the abutment (13) comprises a rod (14) which is arranged on the elongate gear part (5), and a plate (15) which is arranged in an end region of the rod (14) and which abuts the free end (12) of the cover element (9).

7. Drive unit (2) according to claim 6, **characterized in that** the rod (14) has a thread at least in portions.

8. Drive unit (2) according to claim 6 or 7, **characterized in that** the rod (14) is held in a recess (20) at the end of the elongate gear part (5).

9. Drive unit (2) according to at least one of claims 6 to 8, **characterized in that** the plate (15) comprises a through-hole through which the rod (14) passes.

10. Drive unit (2) according to at least one of claims 6 to 9, **characterized in that** the plate (15) has a base surface (17) and a projection (18) protruding therefrom, which engages in an interior space (16) of the cover element (9).

11. Drive unit (2) according to at least one of the preceding claims,
**characterized in that** the cover element (9) is arranged to be freely movable in the receiving space (11) and/or on the abutment (13).

12. Drive unit (2) according to at least one of the preceding claims,
**characterized in that** the elongate gear part (5) is a gear rack.

13. Drive unit (2) according to at least one of the preceding claims,
**characterized in that** the elongate gear part (5) interacts with a second gear part (6) arranged on the slide (3).

14. Drive unit (2) according to claim 13, **characterized in that** the second gear part (6) is a pinion.

15. Lifting and tilting device (1), in particular for a waste collection vehicle, comprising a drive unit (2) for a lift truck according to at least one of the preceding claims.

## Revendications

1. Unité d'entraînement (2) comportant un chariot (3) et une unité formant transmission déplaçant le chariot (3), dans laquelle l'unité formant transmission présente une partie de transmission (5) allongée qui est mobile dans sa direction longitudinale dans un canal de guidage (7) du chariot (3) par rapport à celui-ci, dans laquelle un élément de recouvrement (9) de longueur variable pour la partie de transmission (5), entourant la partie de transmission (5) et conçu comme un élément formant ressort en spirale, est disposé sur au moins une ouverture du canal de guidage (7), **caractérisée en ce qu'**une butée (13) est en appui contre une extrémité libre (12) de l'élément de recouvrement (9).

2. Unité d'entraînement (2) selon la revendication 1, **caractérisée en ce que** l'élément de recouvrement (9) est conçu en forme de cylindre creux ou de cône creux dans un état déployé.

3. Unité d'entraînement (2) selon la revendication 1 ou 2, **caractérisée en ce que** le chariot (3) présente, dans la zone de l'ouverture (8) du canal de guidage (7), un espace de réception (11) pour l'élément de recouvrement (9).

4. Unité d'entraînement (2) selon la revendication 3, **caractérisée en ce que** le canal de guidage (7) présente un diamètre agrandi dans la zone de l'ouverture (8) afin de former l'espace de réception (11).

5. Unité d'entraînement (2) selon au moins l'une des revendications précédentes, **caractérisée en ce que** l'élément de recouvrement (9) est constitué d'un matériau métallique.

6. Unité d'entraînement (2) selon au moins l'une des revendications précédentes, **caractérisée en ce que** la butée (13) comprend une tige (14) qui est disposée sur la partie de transmission (5) allongée et un plateau (15) qui est disposé dans une zone d'extrémité de la tige (14) et est en appui contre l'extrémité libre (12) de l'élément de recouvrement (9).

7. Unité d'entraînement (2) selon la revendication 6, **caractérisée en ce que** la tige (14) présente un filetage au moins dans certaines sections.

8. Unité d'entraînement (2) selon la revendication 6 ou 7, **caractérisée en ce que** la tige (14) est maintenue dans une poche côté extrémité (20) de la partie de transmission (5) allongée.

9. Unité d'entraînement (2) selon au moins l'une des revendications 6 à 8,
**caractérisée en ce que** le plateau (15) présente une ouverture qui est traversée par la tige (14).

10. Unité d'entraînement (2) selon au moins l'une des revendications 6 à 9,
**caractérisée en ce que** le plateau (15) présente une surface de base (17) et une saillie (18) faisant saillie depuis celle-ci et venant en prise dans un espace intérieur (16) de l'élément de recouvrement (9).

11. Unité d'entraînement (2) selon au moins l'une des revendications précédentes, **caractérisée en ce que** l'élément de recouvrement (9) est disposé de manière à être librement mobile dans l'espace de réception (11) et/ou sur la butée (13).

12. Unité d'entraînement (2) selon au moins l'une des revendications précédentes, **caractérisée en ce que** la partie de transmission (5) allongée est une crémaillère.

13. Unité d'entraînement (2) selon au moins l'une des revendications précédentes, **caractérisée en ce que** la partie de transmission (5) allongée coopère avec une seconde partie de transmission (6) disposée sur le chariot (3).

14. Unité d'entraînement (2) selon la revendication 13, **caractérisée en ce que** la seconde partie de transmission (6) est une roue dentée.

15. Dispositif de levage et de basculement (1), en particulier pour un véhicule de collecte de déchets, comportant une unité d'entraînement (2) pour un chariot de levage selon au moins l'une des revendications précédentes.
